# EUROPEAN PATENT APPLICATION

(11) **EP 1 816 499 A1**
(43) Date of publication of application: **08.08.2007**
(21) Application number: 07000606.9
(22) Date of filing: 12.01.2007
(51) Int. Cl.: G02B 6/42

(54) **Unidirectional optical power monitor**

(30) Priority: 06.02.2006 JP 2006027981
(71) Applicant: HITACHI METALS, LTD., Minato-ku, Tokyo 105-8614 (JP)
(72) Inventor: Suzuki, Masaru, Mohka,321-4306 (JP); Ao, Masahiro, Kawachi-gun Tochigi 329-0618 (JP)
(74) Representative: Beetz & Partner

(57) **Abstract**

A small high-performance unidirectional optical power monitor (1) having a directional characteristic of 30 dB or higher is provided. A sleeve (9) in which the center axes of round holes (21,22) in which a GRIN lens (7) and a photo-diode (10) are inserted and fitted are eccentric from each other is used. The entire sleeve (9) or the inner surfaces are preferably formed by a black, non-light-transmissive material. The position of the intermediate wall (26) in the sleeve (9) is at a distance of 0.55L to 0.8L from a tap film (8) of the GRIN lens (7). L is the distance between the tap film (8) and the lens vertex (12) of the photo-diode (10). Preferably, the angle of the intermediate wall (26) is in the range from 45 to 135 degrees, the light reflectivity of the surface of the intermediate wall (26) and of the surfaces (25) of the inner walls is 10 % or less, the surface roughness is 2 nm or higher, and the undulation is 1/2 or less of the wavelength of the light used.

## Description

### BACKGROUND OF THE INVENTION

### 1. Field of the Invention

The present invention relates to an optical power monitor used mainly in the field of optical communication.

### 2. Description of the Related Art

In recent years, remarkable technical innovations in information communication have occurred. Now there is a shift from electrical signal communication to optical signal communication to meet a demand for increasing the communication speed and conditions for an increase in amount of information due to the proliferation of the Internet. Many of cables forming trunks are being replaced with optical cables to achieve an increase in processing speed, because amounts of information from various relay points are gathered to be transmitted through each trunk. There is a trend to reconsider communication between such optical cables and user terminals and there is an increasingly intense demand for the upgrading of environments for more comfortable reduced-cost information communication.

With the progress in upgrading optical communication networks, high-speed exchange of information becomes possible. This is accompanied by expansion of new use of the optical communication networks and, hence, a further increase in amount of information transmitted in every direction in the optical communication networks. To increase the amount of signals per unit time in order to increase the amount of information processable through an optical fiber, high-frequency signals are used in a technique called wavelength multiplexing, i.e., a technique to simultaneously transmit through one optical fiber a multiplicity of signals having different wavelengths and containing different groups of information. Also, forming a dense reliable communication network requires providing connections in many directions to a multiplicity of paths, and use of a plurality of optical fibers is indispensable from the viewpoint of use for a maintenance purpose as well.

In an optical communication circuit for transmitting a multiplicity of signals through an optical fiber, a wavelength division multiplexing (WDM) system is required for the process of separating a wavelength-multiplexed optical signal into signals having different wavelengths, for the reverse process of coupling optical signals having different wavelengths, and for diversion and insertion of optical signals. As the amount of information is increased, the importance of handled information becomes higher. When a dropout of an optical signal is found, there is a need to immediately identify the optical signal and determine where the optical signal dropped out. There is also a need to check the signal intensity in some case, as well as to check the connection for the optical signal. If the transmission distance is increased, a need arises for a device for amplifying an optical signal, e.g., an erbium doped fiber amplifier (EDFA) because the optical signal intensity attenuates during transmission through the optical fiber. In an EDFA, there is a need to accurately grasp the intensity of an input optical signal externally supplied for determination of the rate of amplification and the intensity of the optical signal amplified and output. Functions to perform such fine monitoring are becoming indispensable for the construction of a highly reliable optical communication system.

In a WDM system, optical signal entering and exiting directions are determined in advance and a directionality of an optical signal is not specially required at the time of monitoring of the optical signal. In an EDFA, on the other hand, there is a possibility of occurrence of a reverse flow of an amplified optical signal due to a mechanism for amplifying an optical signal by causing light to enter from a pump laser and propagate through a special fiber. A function to detect an optical signal from an entrance-side fiber only while detecting no return signal from an exit-side output fiber is indispensable for accurate determination of the amount of amplification of an optical signal.

The inventors of the present invention have filed an application of the invention of a unidirectional optical power monitor, which is made public in International Publication WO2005/124415. FIG. 6 shows a sectional view of a unidirectional optical power monitor 1" described in the international publication. A pig tail fiber 2 and a GRIN lens 7 are fixed in a cylindrical tube 6 by a resin, with a predetermined gap 5 interposed therebetween. The pig tail fiber 2 has two optical fibers 3 and 4 disposed parallel to each other while being spaced apart by a small distance from each other, and a glass ferrule 2' in which the optical fibers 3 and 4 are fixed. The GRIN lens 7 has a tap film 8 which reflects and transmits incident light from the optical fiber 3 or 4 at a certain ratio. A photo-diode 10 with a lens which receives light transmitted through the GRIN lens 7 and the tap film 8 is inserted in a hole in a sleeve 9 having a cylindrical external shape and is fixed in the same by a resin. A first round hole 21 in which the GRIN lens 7 is inserted is provided in the sleeve 9 having a cylindrical external shape at one end 23, while a second round hole 22 in which the photo-diode 10 with a lens is inserted is provided at the other end 24. The center axes of the first and second round holes 21 and 22 are set parallel and eccentrically to each other. The first and second round holes 21 and 22 are connected to each other at about the mid-point in the sleeve 9. A through-hole 27 and an intermediate wall 26 are formed generally at the mid-point. Light transmitted by the tap film 8 of the GRIN lens in light entering from one optical fiber 3 (indicated by the solid line arrow in the figure) enters the other optical fiber 4, while light passed through the tap film 8 enters the photo-diode 10 with a lens to be converted into a current and taken out as an electrical signal through an electrode pin 11. Light reflected by the tap film 8 of the GRIN lens in light entering from one optical fiber 4 (indicated by the broken line arrow in the figure) enters the other optical fiber 3, while light passed through the tap film 8 is repeatedly reflected by the intermediate wall 26 and a wall surface 25 of the first round hole 21 to attenuate. Therefore, substantially no amount of light in the light entering from the optical fiber 4 enters the photo-diode 10 with a lens. A directionality is provided such that light entering from one optical fiber 3 and transmitted through the tap film 8 passes through through-hole 27 to reach the photo-diode 10 with a lens while light entering from the other optical fiber 4 and transmitted through the tap film 8 does not reach the photo-diode 10 with a lens.

The function of the GRIN lens will be described briefly. An optical signal entering from one optical fiber 3 in the pig tail fiber 2 enters the GRIN lens 7 while being radiated from the end surface of the optical fiber into the gap 5 and having its beam diameter increased. The direction in which the light travels is changed in the GRIN lens and the light becomes generally collimated light. The light that has become generally parallel and reached the tap film 8 is reflected and transmitted at a certain ratio by the tap film. The reflected light again passes through the GRIN lens, travels through the lens while having its beam diameter further reduced, and is radiated into the gap 5. The radiated light is focused on the end surface of the other optical fiber. Thus, light entering from one optical fiber is connected to the other optical fiber.

The unidirectional optical power monitor in the above-mentioned international publication has a directional characteristic of 25 dB or higher. The directional characteristic is the ratio of the light receiving sensitivity (hereinafter, referred to as "responsivity")A (mA/W) of the photo-diode when light is input from one of the two optical fibers and the responsivity B (mA/W) of the photo-diode when light is input from the other optical fiber. The directional characteristic is defined as (directional characteristic) = 10·log(Responsivity A/ Responsivity B) (dB).

Each of the existing EDFAs amplifies an optical signal by about 15 to 20 dB and suffices for use in a unidirectional power monitor having a directional characteristic of 25 dB or higher. With the increase in amount of information, however, the frequency of separation, coupling, diversion and insertion of optical signals wavelength-multiplexed or to be wavelength-multiplexed has been increased. A demand has therefore arisen for a directional characteristic of 30 dB or higher.

### SUMMARY OF THE INVENTION

An object of the present invention is to provide a small high-performance unidirectional optical power monitor which detects, with a photo-diode, light entering from one optical fiber (input optical fiber) and transmitted through a tap film, which prevents light entering from another optical fiber (output optical fiber) and transmitted through the tap film from entering the photo-diode, and which obtains a directional characteristic of 30 dB or higher by causing the light entering from the output optical fiber and transmitted through the tap film to repeat reflecting and attenuating at the wall surfaces of an intermediate wall and inner walls.

An unidirectional optical power monitor according to the present invention has:
a pig tail fiber having two optical fibers aligned parallel to each other with a small distance and open ends of the optical fibers around a center of an end surface of the pig tail fiber on the end surface of the pig tail fiber,
a columnar GRIN lens having two end surfaces facing each other and a tap film on one end surface of the two end surfaces,
a cylindrical tube, in which the pig tail fiber and the columnar GRIN lens are fixed so that the end surface of the pig tail fiber faces the other end surface of the columnar GRIN lens with a predetermined gap therebetween and so that an end of the columnar GRIN lens having the tap film protrudes from an end of the columnar tube, and
a sleeve having a first and a second ends,
the sleeve having a first round hole extending from the first end and to about a mid-point between the first and second ends and a second round hole extending from the second end to about the mid-point,
the second round hole having its center axis eccentric from a center axis of the first round hole,
the first round hole having at about the mid-point a through-hole connecting to the second round hole and an intermediate wall, and
the end of the columnar GRIN lens having the tap film inserted and fixed in the first round hole, and
a photo-diode disposed at the second end of the sleeve in the second round hole and having a lens facing the through-hole on the front surface. The intermediate wall in the sleeve is at a distance of 0.55L to 0.8L from the tap film of the columnar GRIN lens, wherein L denotes a distance between the tap film of the columnar GRIN lens and a top of the photo-diode lens. The columnar GRIN lens is so arranged in the first round hole of the sleeve that an optical signal entering from one of the two optical fibers (input optical fiber) and passing through the tap film reaches the photo-diode through the first and second round holes, while an optical path of an optical signal entering from the other of the two optical fibers (output optical fiber) and passing through the tap film is obstructed by the intermediate wall. The position of the intermediate wall is defined by a point of intersection of an inner wall of the first round hole and the intermediate wall.

An optical signal entering from the input optical fiber enters the GRIN lens while being radiated from the end surface of the input optical fiber into the gap and having its beam diameter increased. The direction in which the light travels is changed in the GRIN lens and the light becomes generally parallel light, reaches the tap film and is reflected and transmitted at a predetermined ratio. The reflected light again passes through the GRIN lens, travels through the lens while having its beam diameter further reduced, and is radiated into the gap. The radiated light is focused on the end surface of the other optical fiber. Thus, light entering from one optical fiber is connected to the other optical fiber. The light passed through the tap film is guided in the sleeve and enters the photo-diode having an eccentricity from the center axis of the GRIN lens. The photodiode converts the quantity of light into a current to obtain an electrical signal proportional to the quantity of light.

Light entering from the output optical fiber is radiated from the rear end of the pig tail fiber into the gap and thereafter enters the GRIN lens. The direction in which the light travels is changed in the GRIN lens and the light becomes substantially collimated light, reaches the tap film and is reflected and transmitted at a predetermined ratio by the tap film. The light reflected by the tap film passes through the path from the GRIN lens to the gap and is connected to the input optical fiber. The light transmitted through the tap film travels in a direction symmetrical about the center axis of the GRIN lens and is reflected by the wall surface of the intermediate wall provided in the sleeve to change the traveling direction while being attenuated. The light repeats reflecting and attenuating at the inner wall of the first round hole and substantially no part of it enters the photo-diode, thus obtaining a unidirectionality.

If the distance between the tap film of the GRIN lens and the lens tip/extreme end of the photo-diode with a lens is L, the intermediate wall of the sleeve is preferably at a distance of 0.55L or more from the tap film of the columnar GRIN lens. If the distance from the tap film is smaller than 0.55L, there is a risk of part of the light entering from the output optical fiber and transmitted through the tap film entering the photo-diode without attenuating, by, instead of striking the intermediate wall, passing through the through hole, entering the second round hole and being reflected by the inner wall of the second round hole. Conversely, if the distance from the tap film is larger than 0.8L, there is a possibility of part of the light entering from the output optical fiber and transmitted through the tap film being reflected by the inner wall of the first round hole before reflection by the intermediate wall to be detected by the photo-diode. If the intermediate wall of the sleeve is at a distance longer than 0.8L from the tap film, the risk of failure to reflect light by the intermediate wall is increased.

Preferably, in the unidirectional optical power monitor of the present invention, the intermediate wall facing the tap film of the GRIN lens provided in the sleeve is at an angle of 45 degrees or more and 135 degrees or less with respect to the inner wall of the first round hole.

While the light entering from the input optical fiber and transmitted through the tap film enters the photo-diode, the light entering from the output optical fiber and transmitted through the tap film strikes the intermediate wall to be reflected and attenuated. If the angle of the intermediate wall with respect to the inner wall of the first round hole is larger than 135 degrees, the light striking the intermediate wall travels toward the photo-diode with a lens instead of returning to the GRIN lens. The reflected light including scattered light at the time of reflection enters the photo-diode as stray light to cause the photo-diode outputs a current. If a directional characteristic of 30 dB or higher is to be obtained, it is necessary to eliminate such stray light.

If the angle of the intermediate wall from the inner wall of the first round hole is smaller than 45 degrees, light striking the intermediate wall is reflected in the GRIN lens direction and, therefore, a directional characteristic of 30 dB or higher can be easily obtained. However, the extreme end portion of the intermediate wall has an acute angle and the extreme end of the intermediate wall is likely to be chipped or cracked at the time of manufacturing of the sleeve. There is no problem with a chip in the extreme end of the intermediate wall if the chip is unfailingly removed at the parts stage. However, there is a risk of a chip or a crack remaining after a removal operation and becoming larger under variation in operating environment temperature or vibration to form a broken piece of the wall material, which falls in the sleeve. A broken and fallen piece of material in the sleeve may not only act as an obstacle in the optical path but also damage the tap film of the GRIN lens or the lens of the photo-diode. Also, if the acute angle of the extreme end of the intermediate wall is smaller, the difficulty in manufacturing the sleeve is increased. Also for this reason, it is undesirable to reduce the angle to a value smaller than 45 degrees.

Preferably, the sleeve of the unidirectional optical power monitor of the present invention is opaque with respect to light of a wavelength range from 800 nm to 1650 nm, and at least the intermediate wall facing the tap film of the GRIN lens and the wall surfaces of the inner walls of the first and second round holes have a light reflectivity of 10% or less.

If the sleeve is formed of a transparent material, light can pass through the intermediate wall, the inner wall of the first round hole or the inner wall of the second round hole to leak out of the sleeve. Conversely, intrusion of external light cannot be prevented. In many cases, a plurality of unidirectional optical power monitors are used by being placed side by side. In a case where a plurality of unidirectional optical power monitors are placed side by side, there is a risk of light leaking from one of the unidirectional optical power monitors and entering another of the unidirectional optical power monitors. If light leaking out of the one unidirectional optical power monitor enters the photo-diode of the other unidirectional optical power monitor, it acts as interference noise for the unidirectional optical power monitor, resulting in failure to perform light monitoring with stability. Also, light leaking to the outside may strike other component parts or the like and travel in an unexpected direction. Since optical communication uses light of long wavelengths out of the visible range, e.g., 1310 nm and 1550 nm, the direction of travel of leakage light cannot be checked under such a condition and there is also a problem in terms of safety. Therefore, it is necessary to form the sleeve of a non-light-transmissible material in order to prevent leakage of light out of the sleeve. Also, it is possible to eliminate the influence of natural light, illumination light or the like by forming the sleeve of a non-light-transmissible material.

Light entering from the output optical fiber strikes the intermediate wall facing the tap film of the GRIN lens in the sleeve to be attenuated and reflected. The light reflected by the wall surface of the intermediate wall strikes the inner wall of the first round hole, is attenuated and reflected one or more times, and returns toward the GRIN lens. Thereafter, the light strikes the tap film of the GRIN lens and again travels toward the intermediate wall. The worst of conceivable cases is such that, after being attenuated and reflected by the intermediate wall and the inner wall of the sleeve, the light is reflected by the tap film surface of the GRIN lens to enter the photo-diode. It is important to reduce the intensity of light reflected from the wall surface in order to ensure a directional characteristic of 30 dB or higher even in the worst case.

The percentage of the ratio P1/P0 of the intensity P1 of reflected light to the intensity P0 of light radiated to the wall surface is defined as light reflectivity. If the light reflectivity is 10% or less, the intensity of reflected light is reduced to 1/100 or less since reflection is performed one time on each of the intermediate wall and the inner wall surface in the worst case. The reflected light is a result of reflection caused two times, i.e., on the intermediate wall and the inner wall. Therefore, the center of the optical axis of the reflected light does not return to a central portion of the GRIN lens. There is also a possibility of reflected light reflected by the tap film surface of the GRIN lens entering the photo-diode with the optical axis offset from the lens vertex of the photo-diode. Because of this offset of the optical axis, light entering the photo-diode is outside the Gaussian radius. Therefore a reduction to about 1/10 in the intensity of light detected by the photo-diode can be expected. Light entering the photo-diode is reduced to 1/100 or less by reflection caused two times and to about 1/10 due to the shift of the optical axis, that is, attenuated to smaller than 1/1000 (30 dB or more) in total. A directional characteristic of 30 dB or higher can be obtained more easily if the number of occurrences of reflection on the wall surface of the inner wall is increased. Even in the worst case, i.e., the case of the minimum number of occurrences of reflection, a directional characteristic of 30 dB or higher can be obtained by setting the light reflectivity of the sleeve to 10% or less. Needless to say, it is more preferable to use a material having a light reflectivity of several percent or less since the directional characteristic is improved if the light reflectivity is lower.

Preferably, the sleeve of the unidirectional optical power monitor of the present invention is made of black ceramic, graphite or black glass.

Light entering from the output optical fiber is attenuated and reflected at the wall surfaces of the intermediate wall and the inner wall of the sleeve. It is, therefore, required that the light reflectivity of the wall surfaces be low. A low light reflectivity means sufficient absorption of light. Therefore, a black material is preferred. The black ceramic may be a material containing as a main constituent alumina, zirconia, silica, steatite, silicon carbide, silicon nitride, aluminum nitride or a composite material formed of some of these materials. Graphite may be used as a carbon material. In particular, if a gas-nonpermeable material in the form of black glass is used, resin bonding can be easily performed. As black glass, glass having as a main constituent an alumina-based material, a zirconia-based material, a silica-based material, a titania-based material or a composite material formed of some of these materials may be used.

As the sleeve of the unidirectional optical power monitor of the present invention, a sleeve made of a material transparent in the visible light and having a black film of a light reflectivity of 10% or less formed at least on the surfaces of the intermediate wall facing the tap film of the GRIN lens and the inner walls of the first and second round holes may be used.

Preferably, the sleeve is capable of preventing light transmitted through the tap film from leaking to the outside, blocking light from the outside, and has a low light reflectivity. Even in a case where the material of the sleeve is transparent in the visible light region, however, a black film having a reflectivity of 10% or less may be provided on the intermediate wall facing the tap film of the GRIN lens and the inner walls of the first and second round holes to block external light, cause reflection on the intermediate wall and the inner walls and thereby prevent light from leaking to the outside. In a case where a black film is formed on the outer peripheral surface of a transparent sleeve, external leakage of light transmitted through the tap film can be prevented. In such a case, however, the intermediate wall does not perform the desired function and the reflecting position of the inner walls is changed. Therefore, the probability of failure to obtain the desired directional characteristic is high.

The black film provided on the intermediate wall of the transparent sleeve and the inner walls of the first and second round holes of the sleeve may be formed by deposition or sputtering of carbon, black ceramic or black glass.

Preferably, in the sleeve of the optical power monitor of the present invention, at least the intermediate wall facing the tap film of the GRIN lens and the wall surfaces of the inner walls of the first and second round holes have a surface roughness Ra of 2 nm or more, and an undulation of a half of a light wavelength in use or less in an average length AR of a roughness motif.

It is preferable to increase scattering of light at the surface as well as to use a material having a low light reflectivity in limiting reflection of light on the wall surfaces of the intermediate wall and the inner walls of the sleeve. Scattering of light depends on surface irregularities (surface roughness Ra). If the surface roughness is lower, scattering of light is reduced. As the surface roughness is increased, scattering of light tends to increase. It is preferable to set Ra to 2 nm or more in limiting the light reflectivity to 10% or less. The surface roughness Ra is a value measured in accordance with JIS B0601. Since the wavelength of light used is a long wavelength in the vicinity of 1550 nm, specifying the surface undulation is effective in reducing the light reflectivity as well as specifying the surface roughness Ra. Preferably, the average length AR of the roughness motif is obtained from an envelop undulation curve in accordance with JIS B0601, and the AR is 1/2 or less of the wavelength used. Reducing the average undulation length relative to the wavelength used ensures an improvement in the light scattering effect.

A unidirectional optical power monitor having a high directional characteristic of 30 dB or higher can be provided by using a sleeve in which the center axes of the round holes in which a GRIN lens and a photo-diode are shifted from each other, by forming the entire sleeve or the inner wall of the sleeve with a black opaque material, by specifying the position and angle of the intermediate wall in the sleeve and by reducing the light reflectivity of the wall surfaces of the intermediate wall and the inner walls.

### BRIEF DESCRIPTION OF THE DRAWINGS

FIG. 1 is a sectional view of a unidirectional optical power monitor of the present invention;

FIG. 2 is a graph showing the relationship between the position of the intermediate wall and a directional characteristic in EXAMPLE 2 of the present invention;

FIGS. 3A and 3B are sectional views of unidirectional optical power monitors having different intermediate wall angles in EXAMPLE 3 of the present invention;

FIG. 4 is a graph showing the relationship between the angle of the intermediate wall and a directional characteristic in EXAMPLE 3 of the present invention;

FIG. 5 is a sectional view of a unidirectional optical power monitor having a black film in EXAMPLE 5 of the present invention; and

FIG. 6 is a sectional view of a conventional unidirectional optical power monitor.

### DETAILED DESCRIPTION OF THE PREFERRED EMBODIMENTS

Embodiments of the present invention will be described in detail with reference to the drawings. For ease of description, the same components or portions are indicated by the same reference numerals.

### EXAMPLE 1

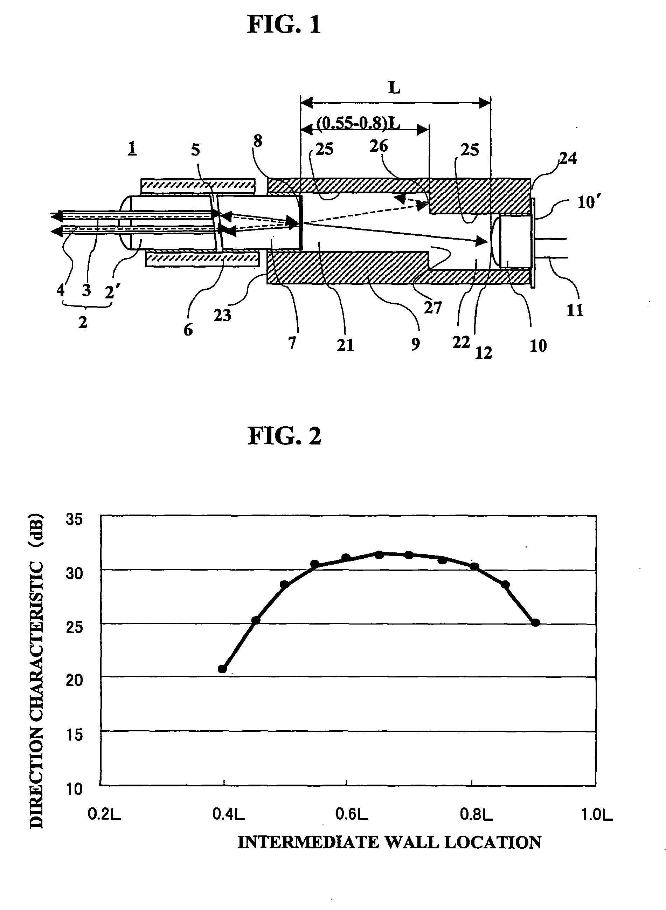

FIG. 1 shows a sectional view of a unidirectional optical power monitor of the present invention. A pig tail fiber 2 was formed by molding an optical fiber 3 and an optical fiber 4 in a glass ferrule 2' while spacing the fibers apart from each other by 0.25 mm between the axes. The outside diameter of the pig tail fiber 2 is 1.8 mm. A GRIN lens 7 having an outside diameter of 1.8 mm, a refractive index of 1.590 and a refractive index gradient constant of 0.326 was used. Tap film 8 provided on the GRIN lens end surface was a dielectric multilayer film formed by periodically laminating SiO₂ and TiO₂ and setting the tap rate representing the light reflectivity to 1%. The diameter of the portion of the diode 10 with a lens inserted in the sleeve 9 was set to 1.8 mm and the diameter of a pedestal portion 10' was set to 2.1 mm. Electrode pins 11 were provided on the pedestal portion 10'. As a photoelectric conversion element (not shown) of the photo-diode 10 with a lens, InGaAs having high sensitivity in an optical communication wavelength band in the vicinity of 1550 nm was used. The sleeve 9 in which the GRIN lens 7 and the photo-diode 10 with a lens were fixed while shifting the center axes thereof from each other was formed of alumina, which is black ceramic. As the first round hole 21 provided in the sleeve 9 as a hole in which the GRIN lens 7 was inserted and fitted and the second round hole 22 provided as a hole in which the photo-diode 10 with a lens was inserted and fitted, and holes having a diameter of 1.9 mm were machined in an alumina column by using a diamond end mill. The first round hole 21 and the second round hole 22 are connected by the through-hole 27 and the intermediate wall 26 is formed therebetween. The center axis of the first round hole 21 and the center axis of the second round hole 22 were shifted by 0.9 mm. The source roughness Ra of the wall surfaces of the intermediate wall 26 and the inner wall of the first round hole 21 was set to about 25 nm, and the average length AR of undulations was set to about 640 nm. A non-light-transmissible black glass having an inside diameter of 2.0 mm and an outside diameter of 2.8 mm was used as cylindrical tube 6 in which the pig tail fiber 2 and the GRIN lens 7 were fixed. Components or members in accordance with these specifications were also used in other examples unless otherwise specified.

The assembly of these components used in this example will be described. Each of the end surfaces of the pig tail finer 2 and the GRIN lens 7 facing each other had a slanting angle of 8 degrees with respect to its diametrical section. The influence of reflection of light at the end surfaces of the pig tail fiber 2 and the GRIN lens 7 can be limited by forming the surfaces facing each other so that the surfaces facing each other have a slanting angle of 8 degrees. After insertion of the GRIN lens 7 and the pig tail fiber 2 into the cylindrical tube 6, the pig tail fiber 2 and the GRIN lens 7 were fixed in the cylindrical tube 6 by bonding using an epoxy resin while introducing light from one optical fiber (input optical fiber) 3 and monitoring light emergent from the other optical fiber (output optical fiber) 4 with an optical multimeter to set an optimum gap 5 such that the intensity of light emergent from the output optical fiber 4 is maximized. The epoxy resin was set by being heated at 100°C for 45 minutes. The tap film 8 side of GRIN lens 7 and the photo-diode 10 with a lens were inserted into the holes at the opposite ends 23 and 24 of the sleeve 9 having an overall length of 14.0 mm to a depth of 2 mm from each end and were fixed by bonding using an epoxy resin. The epoxy resin was set by being heated at 100°C for 45 minutes. The distance L between the tap film 8 and the lens vertex 12 of the photo-diode 10 with a lens was set to 10.0 mm. The intermediate wall 26 for attenuation and reflection of light entering from the output optical fiber 4 and transmitted through the tap film 8 of the GRIN lens was formed so that the distance from the tap film 8 was 7.0 mm. The intermediate wall 26 was set at about 90 degrees from the inner wall 25 of the first round hole 21. The distance between the tap film 8 and the intermediate wall 26 corresponds to 0.70L.

150 unidirectional optical power monitors 1 in accordance with this example were fabricated and the optical and electrical characteristics thereof were evaluated. The measurement results shown below are average values of the 150 articles. Measurements were made by inputting light having a wavelength of 1550 nm and a light intensity of 0 dBm through the input optical fiber 3. The insertion loss representing the degree of optical connection was 0.31 dB, and the responsivity A measured as a characteristic representing an electrical output was 9.8 mA/W. The insertion loss and the responsivity B when light having a wavelength of 1550 nm and a light intensity of 0 dBm was input through the output optical fiber 4 were 0.31 dB and 7.3 µA/W, respectively. It was confirmed that a good directional characteristic of 30.8 dB at the minimum and 31.3 dB on average was obtained.

### EXAMPLE 2

The relationship of directional characteristic with respect to the distance between the intermediate wall 26 and the tap film was obtained by changing the position of the intermediate wall 26. FIG. 2 shows the directional characteristic with respect to the distance between the intermediate wall and the tap film. Sleeves 9 having different intermediate wall portions were made by changing the depths of the first round hole 21 and the second round hole 22 from the first end 23 and the second end 24 of the aluminum column with a diamond end mill. The position of the intermediate wall from the tap film was changed in 0.05L steps from 0.4L to 0.8L. Five unidirectional power monitors having the different distances were assembled and tested. In FIG. 2, the lowest directional characteristic in the directional characteristics of the five unidirectional power monitors is plotted. It was demonstrated that a good-performance unidirectional power monitor having a directional characteristic of 30 dB or higher was obtained by setting the position of the intermediate wall in the range from 0.55L to 0.8L.

### EXAMPLE 3

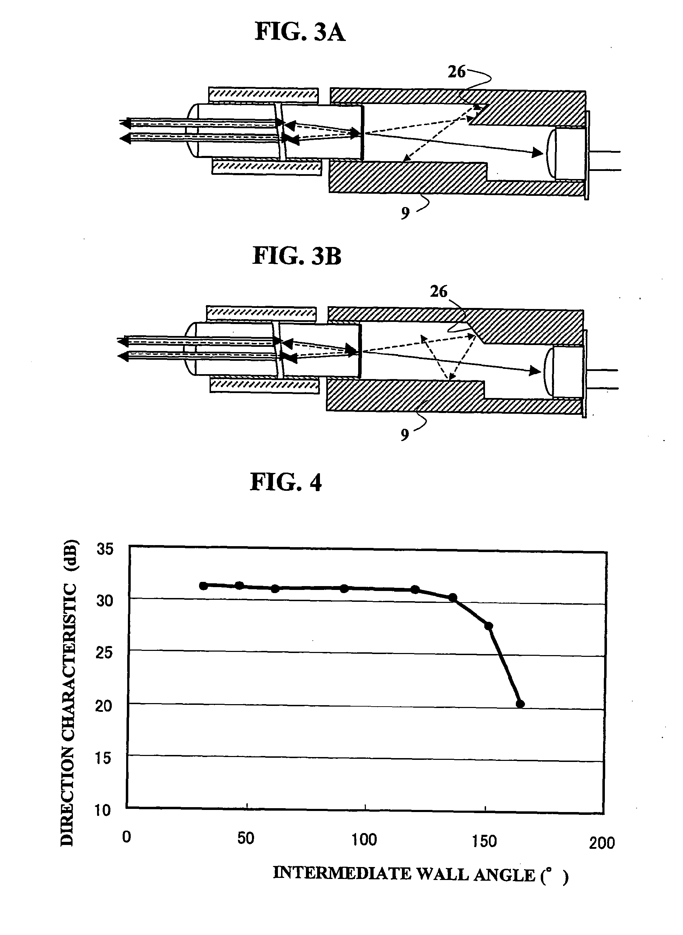

The results of measurement when the angle of the intermediate wall 26 was changed will be described. FIG. 4 is a graph showing the relationship between the angle of the intermediate wall and the directional characteristic. FIG. 3A shows a sectional view of a unidirectional power monitor in which the angle of the intermediate wall is 45 degrees. FIG. 3B shows a sectional view of a unidirectional power monitor in which the angle of the intermediate wall is 135 degrees. When the intermediate wall has an acute angle from the inner wall of the first round hole, the intermediate wall projects on the GRIN lens side. When the intermediate wall has an obtuse angle from the inner wall of the first round hole, the intermediate wall is open toward the photo-diode. The second round hole was provided in the same form as those of EXAMPLES 1 and 2. Eight sleeves 9 having different intermediate wall angles from 30 to 160 degrees were made. By using the sleeves, five unidirectional power monitors 1 were assembled and tested with respect to each intermediate wall angle. In FIG. 4, the lowest directional characteristic in the directional characteristics of the five unidirectional power monitors with respect to each angle is plotted. When the angle was larger than 135 degrees, the directional characteristic was lower than 30 dB. It is thought that while light reflected by the intermediate wall returns toward the GRIN lens when the angle was smaller than 135 degrees, reflected light traveled toward the photo-diode to deteriorate the directional characteristic when the angle was larger than 135 degrees.

It was possible to make even the smaller-angle sleeves having 30 degrees. However, many chips were recognized in the extreme end of the intermediate wall. Trial manufacture of sleeves having an angle smaller than 30 degrees was also performed but chipping occurred frequently and it was impossible to make further progress in trial manufacture. From this fact, it was confirmed that the angle of the intermediate wall was preferably in the range from 45 to 135 degrees.

### EXAMPLE 4

The results of trial manufacture performed by changing the material of the sleeve will be described. Materials used for the sleeve were ceramics shown as specimen Nos. M1 to M7, glasses shown as specimen Nos. M8 to M11 and graphite shown as specimen No. 12 in Table 1. The graphite shown as specimen No. 12 does not belong to either of the ceramic and glass groups but is considered to have highest light absorption. As the graphite, a gas-non-permeable carbon material in the form of black glass was used. The color of each of the samples Nos. M1 to M12 was black or dark gray close to black. Sleeves were made in accordance with the same specifications as those in EXAMPLE 1 except for the sleeve material, and unidirectional optical power monitors were assembled by using these sleeves. Table 1 shows the light reflectivity, the responsivity A, the responsivity B, the directional characteristic and the dark current measured at a wavelength of 1550 nm with respect to bulks of the materials used for the sleeves. The responsivity A is shown as the result of reception by the photo-diode when light entered from the input optical fiber, while the responsivity B is shown as the result of reception by the photo-diode when light entered from the output optical fiber. The directional characteristic is 10·log(Responsivity A/ Responsivity B) (dB). The responsivity, directional characteristic and dark current were shown as average values of five unidirectional power monitors tested. The dark current was an output current from the photo-diode when no optical input was supplied from each of the two optical fibers. The inherent dark current of the photo-diode device is 0.04 to 0.1 nA. A measured dark current value higher than 0.1 nA means that external light enters the unidirectional power monitor by passing through the sleeve. That is, blocking of external light is incomplete and the external light appears as noise. The dark currents of the unidirectional power monitors corresponding to the specimen Nos. M1 to M12 were 0.048 to 0.81 nA and were each lower than 0.1 nA. It was confirmed that blocking of external light was completely performed.

**Table 1**

| No. | Material | Light reflectivity (%) | Responsivity A (mA/W) | Responsivity B (µA/W) | Directional characteristic (dB) | Dark current (nA) |
|---|---|---|---|---|---|---|
| M1 | Alumina | 7.5 | 9.8 | 7.3 | 31.3 | 0.055 |
| M2 | Zirconia | 8.3 | 10.1 | 8.1 | 31.0 | 0.048 |
| M3 | Silica | 7.2 | 10.0 | 7.5 | 31.2 | 0.058 |
| M4 | Steatite | 5.8 | 10.3 | 6.3 | 32.1 | 0.049 |
| M5 | Silicon carbide | 4.3 | 9.9 | 6.5 | 31.8 | 0.052 |
| M6 | Silicon nitride | 4.6 | 10.1 | 5.8 | 32.4 | 0.067 |
| M7 | Aluminum nitride | 4.1 | 9.7 | 5.5 | 32.5 | 0.061 |
| M8 | Alumina-based glass | 9.6 | 9.8 | 7.8 | 31.0 | 0.066 |
| M9 | Zirconia-based glass | 9.3 | 10.0 | 8.2 | 30.9 | 0.073 |
| M10 | Silica-based glass | 8.9 | 10.2 | 8.5 | 30.8 | 0.081 |
| M11 | Titania-based glass | 9.0 | 9.5 | 9.1 | 30.2 | 0.064 |
| M12 | Graphite | 3.2 | 9.8 | 5.3 | 32.7 | 0.057 |

A directional characteristic value of 31.5 dB on average among the specimen Nos. M1 to M12 was obtained. Even the lowest directional characteristic in the characteristics of the five unidirectional power monitors with respect to each material was not lower than 30 dB. The difference due to the kinds of sleeve materials does not appear clearly but the directional characteristics relating to the glass sleeves made of the material Nos. M1 to M7 are higher by about 0.5 to 1.0 dB than the directional characteristics relating to the glass sleeves made of the material Nos. M8 to M11. This difference is considered due to variation in surface roughness of the wall surfaces of the intermediate wall and the inner walls. The surface roughness Ra of the glass sleeve is about 3 nm. The surface roughness Ra of the ceramic sleeve having high hardness and difficult to work is higher, about 50 nm. Also, voids exist in the ceramic material, although the percentage of the voids is about several percent. It is probable that diffused reflection is increased due to the voids. The responsivities B of the monitors having the ceramic sleeves are generally lower than those of the monitors having the glass sleeves. It is therefore thought that the directional characteristic was improved due to the higher surface roughness and the voids. The undulation of the wall surface of either of the glass sleeves and the ceramic sleeves was about 500 to 900 nm. However, an undulation of about 1500 nm and an undulation of about 1800 nm were observed in two of the glass sleeves made of the titania-based glass material No. M11. The responsivities B of the monitors using these specimens were high, 10.8 and 12.3 µA/W. The responsivities B of the monitors using the other three specimens were low. The average responsivity B of the monitors using these specimens is 9.1 µA/W and does not differ largely from these of the monitors using the other glass sleeve specimens. The undulation of the specimen from which light receiving sensitivities B lower than the average value shown in Table 1 in the specimen Nos. M1 to M10 was examined and found to be 800 to 900 nm. This undulation was larger than the half wavelength 775 nm of the wavelength 1550 nm of the light used. From this, it is thought that a preferable range of undulation of the wall surfaces is equal to or smaller than 1/2 of the wavelength of the light used. The monitor using graphite has a low responsivity B and a directional characteristic higher than 32 dB, i.e., the best characteristics among the samples.

### EXAMPLE 5

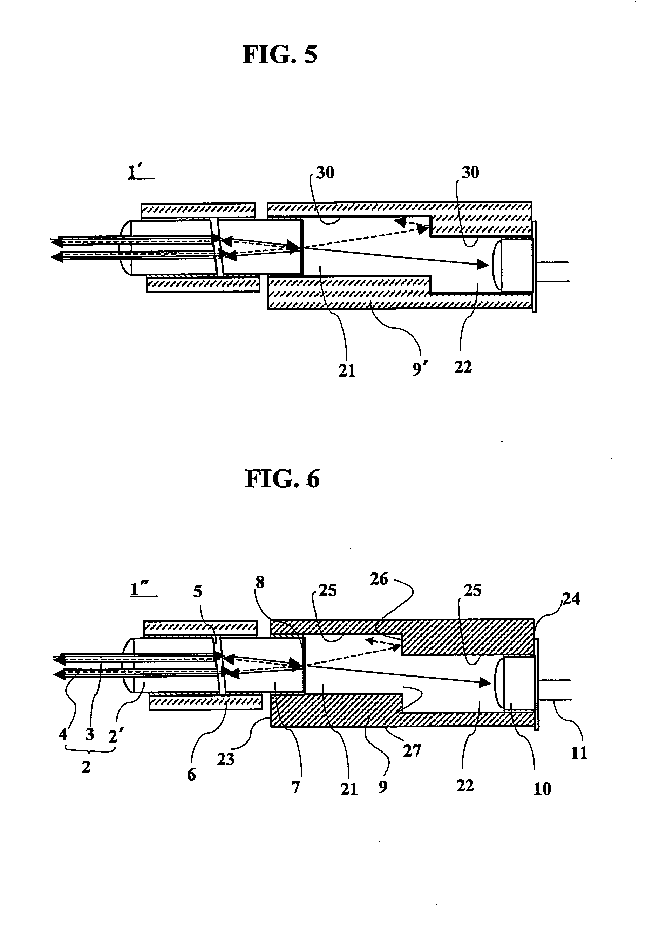

FIG. 5 shows a sectional view of a unidirectional power monitor 1' made by using transparent glass as sleeve 9' and forming film 30 having a low light reflectivity at least on the intermediate wall facing the GRIN lens end surface and the inner walls of the first and second round holes 21 and 22. Table 2 shows materials used as the film having a low light reflectivity. Films of ceramic and glass materials were formed by using a sputtering apparatus. Carbon film was formed by using a deposition apparatus. The light transmittances of the films of the materials formed on glass plates were measured with a spectrophotometer to determine the film thickness at which the light transmittance was 0.01% or less. The film thicknesses of the ceramic materials defined in this way were about 1 µm, while those of the glass and graphite were 3 to 5 µm. Unidirectional power monitor 1' samples were assembled by forming the films 30 of the thicknesses determined as a specimen example on the inner walls of the first and second round holes 21 and 22 and the intermediate walls of the sleeves 9' and by using the sleeves. The light reflectivity was also measured with respect to these specimens. Table 2 shows collectively the light reflectivity, the responsivity A, the responsivity B, the directional characteristic and the dark current with respect to the film materials. The responsivity, the directional characteristic and the dark current are average values of five unidirectional power monitors tested with respect to each film material. The dark currents of the unidirectional power monitors tested with respect to specimen Nos. N1 to N12 were 0.050 to 0.82 nA, smaller than 0.1 nA. Thus, it was confirmed that blocking of external light was completely performed.

**Table 2**

| No. | Material | Light reflectivity (%) | Responsivity A (mA/W) | Responsivity B (µA/W) | Directional characteristic (dB) | Dark current (nA) |
|---|---|---|---|---|---|---|
| N1 | Alumina | 8.2 | 9.9 | 8.2 | 30.8 | 0.063 |
| N2 | Zirconia | 8.7 | 9.8 | 9.1 | 30.3 | 0.061 |
| N3 | Silica | 7.6 | 10.1 | 8.6 | 30.7 | 0.050 |
| N4 | Steatite | 6.0 | 9.9 | 7.5 | 31.2 | 0.052 |
| N5 | Silicon carbide | 4.8 | 10.2 | 6.3 | 32.1 | 0.071 |
| N6 | Silicon nitride | 5.1 | 10.7 | 6.8 | 32.0 | 0.073 |
| N7 | Aluminum nitride | 4.9 | 10.3 | 6.1 | 32.3 | 0.082 |
| N8 | Alumina-based glass | 9.7 | 10.1 | 8.9 | 30.5 | 0.059 |
| N9 | Zirconia-based glass | 9.8 | 9.7 | 9.2 | 30.2 | 0.057 |
| N10 | Silica-based glass | 9.5 | 9.9 | 9.5 | 30.2 | 0.063 |
| N11 | Titania-based glass | 9.3 | 10.0 | 8.9 | 30.5 | 0.060 |
| N12 | Graphite | 4.1 | 9.9 | 6.4 | 31.9 | 0.066 |

From each of the specimen Nos. N1 to N12, a directional characteristic higher than 30 dB was obtained. Substantially no difference due to the difference between the materials was observed. However, in comparison with the bulk materials in EXAMPLE 4 with respect to the same materials, the responsivity B and the light reflectivity were generally deteriorated. This is thought to be because the surface in EXAMPLE 5 corresponding to the surface formed by diamond end milling on the bulk material in EXAMPLE 4 is formed by diamond end milling on columnar glass and performing film forming on the worked glass, the surface roughness is reduced to increase the light reflectivity and, hence, the responsivity B.

While in EXAMPLE 5 a sputtering apparatus and a deposition apparatus were used for film forming, films formed by kneading powders of the material Nos. N1 to N12 in a resin and applying the kneaded mixtures may alternatively be used. However, it is technically difficult to perform film forming on the intermediate wall and the inner walls since the diameters of the first and second round holes are about 2 mm and the depths of these holds are 5 to 8 mm. A method of splitting the sleeve into halves and combining the split halves to form the cylinder after performing film forming may be used to easily carry out the film forming.

### List of Reference Signs

- 1: unidirectional optical power monitor
- 2: pig tail fiber
- 2': glass ferrule
- 3: optical fiber
- 4: optical fiber
- 5: gap
- 6: cylindrical tube
- 7: GRIN lens
- 8: tap film
- 9: sleeve
- 9': sleeve
- 10: diode (photo-diode)
- 10': pedestal portion
- 11: electrode pin

- 21: first round hole
- 22: second round hole
- 23: opposite ends
- 24: opposite ends
- 25: wall surface of round holes
- 26: intermediate wall
- 27: through-hole
- 30: film

## Claims

1. Unidirectional optical power monitor (1), comprising:
a pig tail fiber (2) having two optical fibers (3,4) aligned parallel to each other with a small distance and open ends of the optical fibers around the center of the end surface of the pig tail fiber (2) on the end surface of the pig tail fiber (2),
a columnar GRIN lens (7) having two end surfaces facing each other and a tap film (8) on one end surface of the two end surfaces,
a cylindrical tube (6), in which the pig tail fiber (2) and the columnar GRIN lens (7) are fixed so that the end surface of the pig tail fiber (2) faces the other end surface of the columnar GRIN lens (7) with a predetermined gap (5) therebetween and so that the end of the columnar GRIN lens (7) having the tap film (8) protrudes from an end of the cylindrical tube (6), and
a sleeve (9) having a first end (23) and a second end (24),
the sleeve (9) having a first round hole (21) extending from the first end (23) to about the mid-point between the first end (23) and the second end (24) and a second round hole (22) extending from the second end (24) to about the mid-point,
the second round hole (22) having its center axis eccentric from the center axis of the first round hole (21),
the first round hole (21) having at about the mid-point a through-hole (27) connecting to the second round hole (22) and an intermediate wall (26), and
the end of the columnar GRIN lens (7) having the tap film (8) inserted and fixed in the first round hole (21), and
a photo-diode (10) disposed at the second end (24) of the sleeve (9) in the second round hole (22) and having a lens facing the through-hole (27),
wherein the intermediate wall (26) in the sleeve (9) is at a distance of 0.55L to 0.8L from the tap film (8) of the columnar GRIN lens (7), wherein L denotes the distance between the tap film (8) of the columnar GRIN lens (7) and the top (12) of the photo-diode lens, and
wherein the columnar GRIN lens (7) is so arranged in the first round hole (21) of the sleeve (9) that an optical signal entering from one of the two optical fibers (3,4) and passing through the tap film (8) reaches the photo-diode (10) through the first round hole (21) and the second round hole (22), while the optical path of an optical signal entering from the other of the two optical fibers (3,4) and passing through the tap film (8) is obstructed by the intermediate wall (26).

2. Unidirectional optical power monitor (1) according to claim 1, wherein the intermediate wall (26) disposed in the sleeve (9) is at an angle of 45° or more and 135° or less with respect to the inner wall of the first round hole (21).

3. Unidirectional optical power monitor (1) according to claim 1 or 2, wherein the sleeve (9) is opaque with respect to light of a wavelength in the range of 800 to 1650 nm, and at least the intermediate wall (26) facing the tap film (8) of the columnar GRIN lens (7) and the wall surfaces (25) of the inner walls of the first round hole (21) and the second round hole (22) have a light reflectivity of 10 % or less.

4. Unidirectional optical power monitor (1) according to claim 3, wherein the sleeve (9) is made of black ceramic, graphite or black glass.

5. Unidirectional optical power monitor (1) according to any of claims 1 to 3, wherein the sleeve (9) is made of a transparent material with respect to visible light, and a black film of a light reflectivity of 10 % or less with respect to light of a wavelength in the range of 800 to 1650 nm is provided on at least the intermediate wall (26) facing the tap film (8) of the columnar GRIN lens (7) and the wall surfaces (25) of the inner walls of the first round hole (21) and the second round hole (22).

6. Unidirectional optical power monitor (1) according to claim 5, wherein the black film is made of carbon, black ceramic or black glass.

7. Unidirectional optical power monitor (1) according to any of claims 1 to 6, wherein at least the intermediate wall (26) facing the tap film (8) of the columnar GRIN lens (7) and the wall surfaces (25) of the inner walls of the first round hole (21) and the second round hole (22) have a surface roughness Ra of 2 nm or more, and an undulation of a half of the wavelength of the light used or less in an average length AR of a roughness motif.
